# EUROPEAN PATENT SPECIFICATION

(11) **EP 1 441 149 B1**
(45) Date of publication and mention of the grant of the patent: **29.03.2006**
(21) Application number: 02760831.4
(22) Date of filing: 13.09.2002
(51) Int. Cl.: F16H 7/08, F16H 7/18

(54) **CAM CHAIN TENSIONER**
NOCKENKETTENSPANNVORRICHTUNG
TENDEUR DE CHAINE A CAMES

(30) Priority: 31.10.2001 JP 2001333829
(43) Date of publication of application: 28.07.2004
(73) Proprietor: HONDA GIKEN KOGYO KABUSHIKI KAISHA, Tokyo 107-8556 (JP)
(72) Inventor: SAWAMURA, Y., Wako-shi, Saitama 351-0193 (JP); SHIGIHARA, Akira, c/o K.K. HONDA GIJUTSU KENKYUSHO, Wako-shi, Saitama 351-0193 (JP); AKUTSU, Toshiharu c/o K.K. HONDA GIJUTSU KENKYUSHO, Wako-shi, Saitama 351-0193 (JP)
(74) Representative: Prechtel, Jörg
(86) International application number: PCT/JP2002/009422
(87) International publication number: WO 2003/038308

(56) References cited:
- EP-A- 0 867 600
- DE-A- 4 237 598
- DE-A- 19 756 489
- GB-A- 2 351 136
- GB-A- 2 371 613
- JP-A- 2001 311 457
- JP-U- 5 042 798
- PATENT ABSTRACTS OF JAPAN vol. 1996, no. 10, 31 October 1996 (1996-10-31) & JP 08 145131 A (HOKUSHIN IND INC), 4 June 1996 (1996-06-04)

## Description

### TECHNICAL FIELD

The present invention relates to a timing chain tensioning device for a valve mechanism included in an OHC internal combustion engine for a vehicle or the like, corresponding to the preamble of claim 1.

### BACKGROUND ART

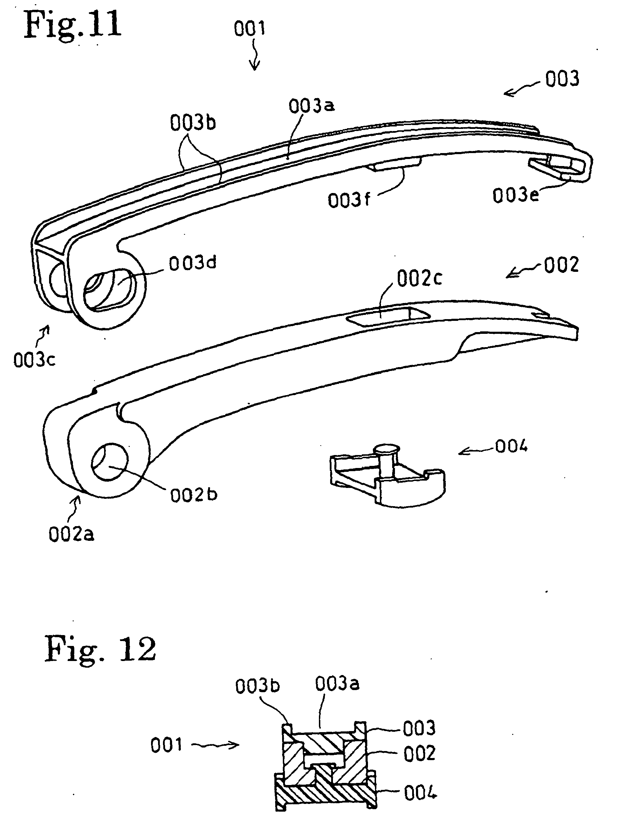

Fig. 11 is an exploded perspective view of a prior art timing chain tensioning device 001 disclosed in JP-A No. 42798/1993. The timing chain tensioning device 001 includes an arm 002 of a metal, a shoe 003 of a resin extended on the front surface of the arm 002, and a pad 004 of a resin connected to a middle lower part of the arm 002. Fig. 12 is a cross-sectional view of a part including the pad 004 of the assembled timing chain tensioning device 001.

The arm 002 is formed of a metal, such as aluminum, and has a base end part 002a provided with a hole 002b in which an attaching bolt is inserted. A groove 003a of a width substantially equal to the width of a timing chain is formed in a working surface of the shoe 003 to be attached to the arm 002. The groove 003a is defined by a bottom surface along which a timing chain slides, and low opposite side walls 003b. Joining legs are formed in a base end part 003c of the shoe 003. The base end part 002a of the arm 002 is disposed between the joining legs respectively provided with slots 003d of the base end part 003c of the shoe 003. The attaching bolt is passed through the slots 003d of the shoe 003 and the hole 002b of the arm 002 to fastened the base end part 002a of the arm 002 and the base end part 003c of the shoe 003 together. A free end part of the shoe 003 is bent to form a U-shaped hook 003e, which is engaged with a free end part of the arm 002. A locating protrusion 003f is formed in a middle part of the shoe 003. The locating protrusion 003f is fitted in a recess 002c formed in the arm 002 to locate the shoe 003 correctly on the arm 002. The pad 004 is connected to the back surface, i.e. , a surface opposite to the front surface to face the timing chain of the arm 002. The pad 004 serves as a sound absorbing member that absorbs an attack sound generated when a projection of a tensioner lifter strikes against the arm 002. Although the pad 004 serving as a sound absorbing member of this timing chain tensioning device is attached to the arm 002 by fitting a part thereof in a corresponding opening formed in the arm 002, many other arms are provided with a back rubber member attached thereto by baking.

In this prior art timing chain tensioning device, the joining legs of the base end part of the shoe extends on the opposite sides of the base end part of the arm. Therefore, an additional machining time is necessary for forming the joining legs of the shoe. Since the prior art timing chain tensioning device has the pad 004 put on the back surface of the arm 002 or the back rubber member joined to the arm by baking, additional parts, work time and labor are necessary for manufacturing the pad and putting the pad on the arm or attaching the back rubber member to the arm by baking.

The present invention provides means capable of replacing members and work necessary for manufacturing the prior art timing chain tensioning device and it is an object of the present invention to provide a timing chain tensioning device comprising a reduced number of members, capable of being manufactured by reduced man-hours and reduced steps.

DE 42 37 598 A shows a timing chain tensioning device in accordance with the preamble of claim 1. There, the cushioning pad is a member which is separate from both the arm and the resin shoe and has an upstanding mounting shaft. The mounting shaft on the cushioning pad is forcibly passed through a hole formed in the arm. Thus, the manufacturing process for this timing chain tensioning device necessitates separate molding of the cushioning pad and a separate step of securing the cushioning pad to the arm.

### DISCLOSURE OF THE INVENTION

To achieve the foregoing object, the present invention provides a timing chain tensioning device in accordance with claim 1.

In the timing chain tensioning device of the present invention thus constructed, only the side lug of the base end part of the resin shoe is extended so as to correspond to the attaching part of the arm, and is fastened together with the attaching part of the arm, and the side lug of the base end part of the resin shoe is provided with the opening. The resin shoe can be easily manufactured and facilitates attaching work. A substantially middle part of the shoe is extended so as to extend around the side edges of the arm to the back side of the arm to form the part of the shoe is used as a cushioning member. Therefore, the timing chain tensioning device needs a small number of parts and facilitates attaching a cushioning member.

The U-shaped hook and the cushioning pad are formed integrally with the resin shoe.

Preferably, the U-shaped hook is provided on its inner side surface with a positioning projection for determining the lateral position of the resin shoe relative to the arm. Preferably, the cushioning pad is provided on its inner side surface with a positioning projection for determining the lateral position of the resin shoe relative to the arm.

The resin shoe may be provided with a positioning leg for determining the lateral position of the resin shoe relative to the arm in a part thereof near a middle part of thereof.

### BRIEF DESCRIPTION OF THE DRAWINGS

Fig. 1 is a cutaway front elevation of a part including a timing chain of an OHC internal combustion engine provided with a timing chain tensioning device in a preferred embodiment according to the present invention for a motorcycle;
Fig. 2A is a plan view of an arm included in the timing chain tensioning device;
Fig. 2B is a side elevation of the arm of the timing chain tensioning device;
Fig. 3 is a side elevation of a shoe included in the timing chain tensioning device;
Fig. 4 is an enlarged view of a part of the shoe taken in the direction of the arrow IV in Fig. 3;
Fig. 5 is an enlarged view of a part of the shoe taken in the direction of the arrow V in Fig. 3;
Fig. 6 is an enlarged sectional view taken on line VI-VI in Fig. 3:
Fig. 7 is an enlarged sectional view taken on line VII-VII in Fig. 3;
Fig. 8 is an enlarged sectional view taken on line VIII-VIII in Fig. 3;
Fig. 9 is an enlarged sectional view taken on line IX-IX in Fig. 3;
Fig. 10 is a side elevation of a base end part of an assembly of the arm and the shoe of the timing chain tensioning device;
Fig. 11 is an exploded perspective view of a prior art timing chain tensioning device; and
Fig. 12 is a cross-sectional view of a part including a pad of the timing chain tensioning device shown in Fig. 11.

### BEST MODE FOR CARRYING OUT THE INVENTION

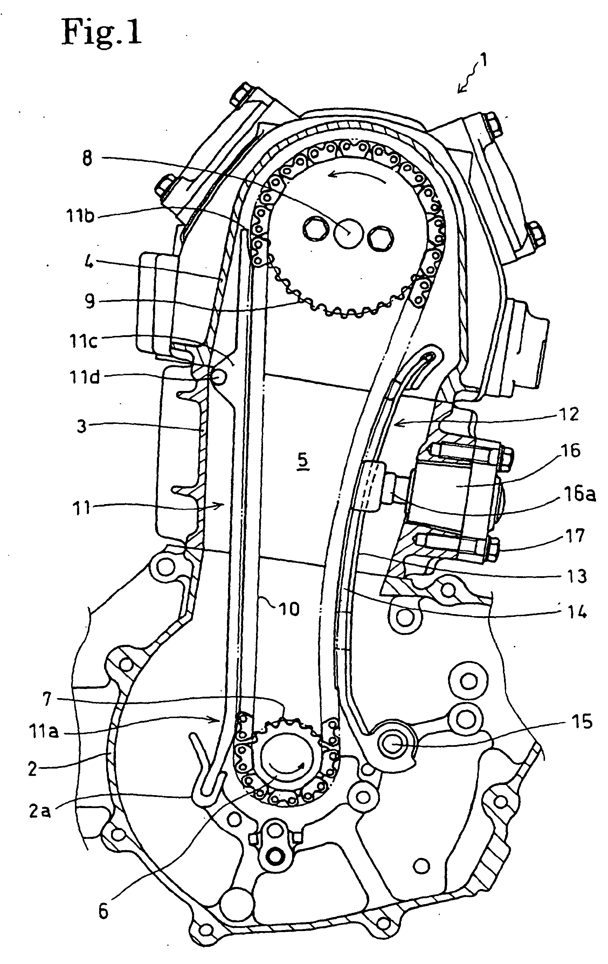

Fig. 1 is a cutaway front elevation of a part including a timing chain of an OHC internal combustion engine 1 provided with a timing chain tensioning device in a preferred embodiment of the present invention for a motorcycle. The internal combustion engine 1 is assembled by placing a crankcase 2, a cylinder block 3 and a cylinder head 4 in that order one upon another. A chain chamber 5 is extended along the crankcase 2, the cylinder block 3 and the cylinder head 4. The internal combustion engine 1 shown in Fig. 1 is not provided with any cylinder head cover because the cylinder head 4 is divided longitudinally into two parts.

An end part of a crankshaft 6 projects into a section corresponding to the crankcase 2 of the chain chamber 5, and a drive sprocket 7 is mounted on the end part of the crankshaft 6. An end part of camshaft 8 projects into a section corresponding to the cylinder head 4 of the chain chamber 5. A driven sprocket 9 is mounted on the end part of the camshaft 8. A timing chain 10 is extended between the drive sprocket 7 and the driven sprocket 9. The drive sprocket 7 drives the driven sprocket 9 for rotation in the direction of the arrow through the timing chain 10 to rotate cams, not shown, formed on the camshaft 8.

A timing chain guide 11 of a resin is extended along the tight side pulled by the drive sprocket 7 of the timing chain 10. The timing chain guide 11 has one end part extending from a bend 11a is inserted in a recess formed in a support 2a formed on a part in the chain chamber 5 of the crankcase 2, and the other end part 11b is free. The timing chain guide 11 has an attaching part 11c in a part near the other end part 11b. The timing chain guide 11 is supported on the cylinder block 3 by a pin 11d. The timing chain guide 11 has a substantially straight guide part having a bottom wall and low side walls on the opposite sides of the bottom wall. The bottom wall and the side walls define a groove. The timing chain 10 slides along the surface of the bottom wall. The side walls prevent the timing chain 10 from running off the chain guide 11.

A timing chain tensioning device 12 in a preferred embodiment according to the present invention is pressed against the slack side extending between the push side of the drive sprocket 7 and the driven sprocket of the timing chain 10 by a hydraulic tensioner lifter 16 to take up a slack in the slack side of the timing chain 10. The tensioner lifter 16 is paced in the chain chamber 5 and is fastened to the outer surface of the cylinder block 3 with bolts 17. The tensioner lifter 16 is provided with a rod 16a pushed by hydraulic pressure so as to project into the chain chamber 5.

The timing chain tensioning device 12 includes an arm 13 formed of a highly elastic steel, and a resin shoe 14 attached to a surface facing the timing chain 10 of the arm 13. A base end part of the arm 13, and a side lug 14c of a base end part of the shoe 14 of the timing chain tensioning device 12 on the side of the drive sprocket 7 are fastened together to the crankcase 2 with a bolt 15.

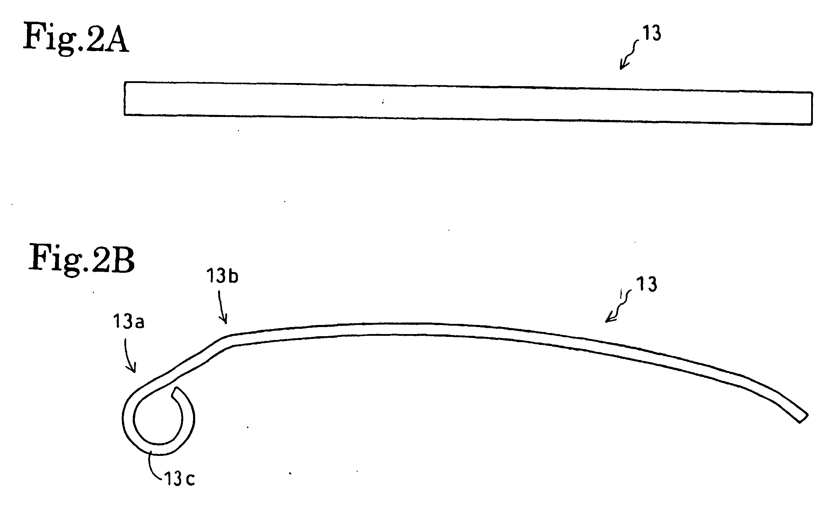

Fig. 2A is a plan view of the arm 13 of the timing chain tensioning device 12, and Fig. 2B is a side elevation of the arm 13. The arm 13 is formed by curving a strip of a highly elastic steel, such as a spring steel. The base end part 13a of the arm 13 extends from a bend 13b and is curled in a ring 13c. The bolt 15 is passed through the ring 13c.

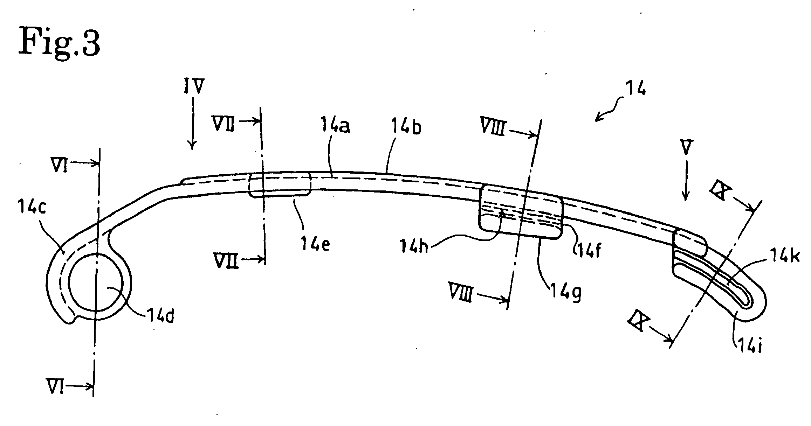

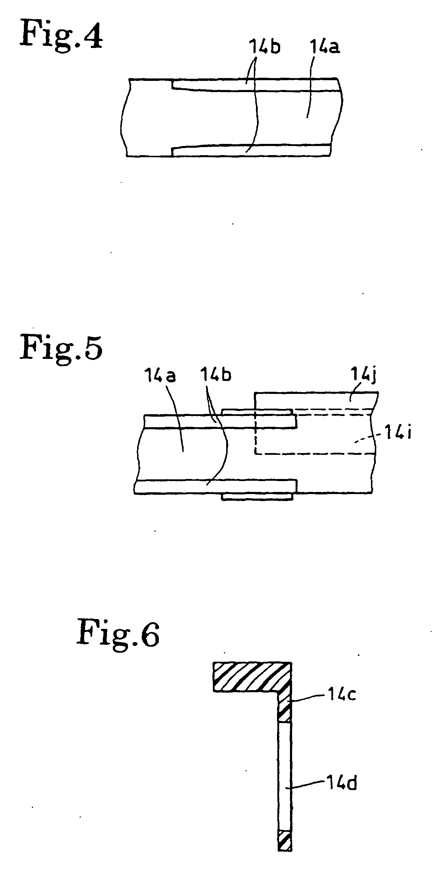

Fig. 3 is a side elevation f the shoe 14 of the timing chain tensioning device 12, Figs. 4 and 5 are enlarged views of parts of the shoe 14 taken in the directions of the arrows IV and V, respectively, in Fig. 3, and Figs. 6, 7, 8 and 9 are enlarged sectional views taken on lines VI-VI, VII-VII, VIII-VIII and IX-IX, respectively, in Fig. 3. The shoe 14 is a monolithic structure formed of a hard synthetic rubber in a shape conforming to the arm 13.

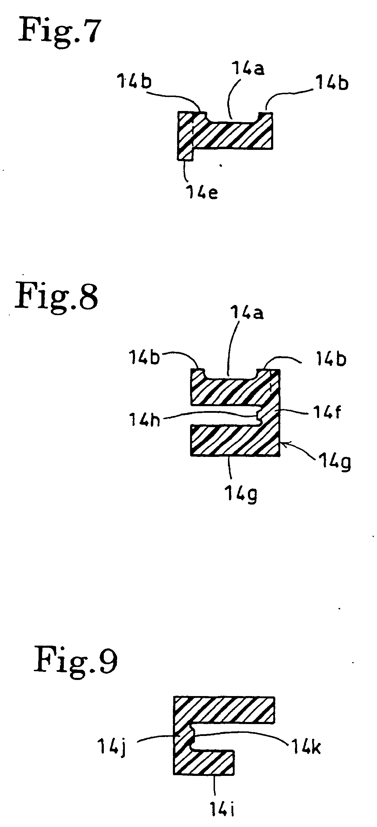

As obvious from Figs. 4 and 5, a groove 14a of a width approximately equal to the width of the timing chain 10 is formed in a working side of the shoe 14. The shoe 14 has a bottom wall and low side walls 14b on the opposite sides of the bottom wall. The bottom wall and the side walls 14b define the groove 14a. The timing chain 10 slides along the surface of the bottom wall. The side walls 14b prevent the timing chain 10 from running off the chain guide 11. As shown in Fig. 6, a side lug 14c provided with an opening 14d extends from one side of the base end part of the shoe 14 so as to extend along and correspond to the ring 13a of the arm 13 . As shown in Fig. 7, the shoe 14 is provided in a part on the side of the base end part with respect to a middle part thereof with a positioning leg 14e. The positioning leg 14e is formed integrally with the shoe 14. The positioning leg 14e comes into contact with one of the sides of the arm 13 to determine the lateral position of the shoe 14 relative to the arm 13. As shown in Fig. 8, the shoe 14 is provided in a part on the side of the free end with respect to the middle part thereof with a U-shaped arm 14f extending along the other side of the shoe 14 to a part serving as a contact pad 14g on the back side of the shoe 14 corresponding to the tensioner lifter 16. The arm 14f is formed integrally with the shoe 14. A positioning projection 14h is formed on the inner surface of a side part of the U-shaped arm 14f. As shown in Fig. 3, a free end part of the arm 13 is bent in a U-shape to form a hook 14i. The hook 14i has a side part 14j on the same side as the positioning leg 14e. Thus, the free end part of the shoe 14 has a U-shaped cross section. A positioning projection 14k is formed on the inner surface of the side part 14j.

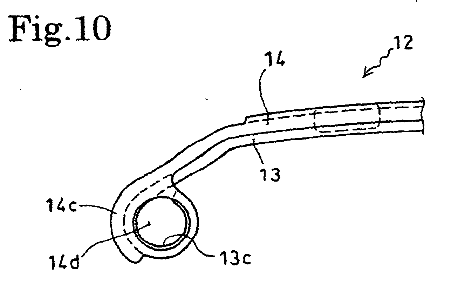

Fig. 10 shows the base end part of the timing chain tensioning device 12 formed by assembling the arm 13 and the shoe 14. When the timing chain tensioning device 12 is incorporated into the internal combustion engine, the free end part of the arm 13 is inserted laterally in a groove formed in the U-shaped arm 14f of the shoe 14. Then, the free end part of the arm 13 is pressed in the hook 14i of the show 14. Then, the corresponding surfaces of the arm 13 and the shoe 14 come into contact with each other. The lateral position of the shoe 14 relative to the arm 13 is determined by the positioning lug 14e and the positioning projections 14h and 14k. In this state, the respective side surfaces of the ring 13c of the arm 13, and the side lug 14c of the base end part of the shoe 14 are contiguous with each other, and an opening defined by the ring 13c and the opening 14d of the side lug 14c of the shoe 14 coincide with each other as shown in Fig. 10. The bolt 15 is passed through the opening of the ring 13c and the opening 14d of the side lug 14c to fasten the arm 13 and the shoe 14 together to the crankcase 2.

As apparent from the foregoing description, the arm 13 can be easily formed by bending a metal strip in a short processing time. The lateral position of the show 14 relative to the arm 13 is determined by the positioning lug 14e and the positioning projections 14h and 14k, and the shoe 14 is held on the arm 13 without using any adhesive by engaging the hook 14i with the free end of the arm 13 and fastening the side lug 14c to the ring 13c of the arm 13 with the bolt 15. Thus, the timing chain tensioning device requires reduced man-hours for assembling. Since the side lug 14c extends only on one side of the shoe 14, the shoe 14, as compared with a shoe provided with side lugs on the opposite sides thereof, can be easily manufactured and combined with the arm 13. Since the cushioning pad 14g serving as a cushioning member is formed integrally with the shoe 14, the number of parts is reduced and additional man-hours for manufacturing, attaching and baking a separate cushioning member are unnecessary.

## Claims

1. A timing chain tensioning device comprising:
an arm (13) having an attaching part formed in its base end part; and
a resin shoe (14) mounted on the arm (13) so as to extend along the arm (13) and to be brought into sliding contact with a chain (10); wherein a U-shaped hook (14i) that engages a free end part of the arm (13) is formed in a free end part of the resin shoe (14), a side lug (14c) is extended from one side of a base end part of the resin shoe (14) so as to correspond to the attaching part of the arm (13), the side lug (14c) of the base end part of the resin shoe (14) is provided with an opening (14d) for use in fastening the attaching part of the arm (13) and the base end part of the resin shoe (14) together, and a cushioning pad (14g) having a U-shaped cross section with which a tensioner lifter comes into contact is formed in a substantially middle part of the resin shoe (14) so as to extend around a side to the back surface of the arm (13),
**characterized in that** the U-shaped hook (14i) and the cushioning pad (14g) are formed integrally with the resin shoe (14).

2. The timing chain tensioning device according to claim 1, wherein the U-shaped hook (14i) has a U-shaped cross section and is provided on its inner side surface with a positioning projection (14k) for determining the lateral position of the resin shoe (14) relative to the arm (13).

3. The timing chain tensioning device according to claim 1, wherein the cushioning pad (14g) is provided on its inner side surface with a positioning projection (14h) for determining the lateral position of the resin shoe (14) relative to the arm (13).

4. The timing chain tensioning device according to claim 1, wherein the resin shoe (14) is provided with a positioning leg (14e) for determining the lateral position of the resin shoe (14) relative to the arm (13) in a part thereof near a middle part thereof.

## Patentansprüche

1. Steuerketten-Spannvorrichtung, umfassend:
einen Arm (13), der einen in seinem Basisendteil ausgebildeten Halterungsteil aufweist; und
einen Harzschuh (14), der an dem Arm (13) so angebracht ist, dass er sich entlang dem Arm (13) erstreckt und in Gleitkontakt mit einer Kette (10) gebracht wird;
worin ein U-förmiger Haken (14i), der an einen freien Endteil des Arms (13) angreift, in einem freien Endteil des Harzschuhs (14) ausgebildet ist, wobei sich ein Seitenansatz (14c) von einer Seite des Basisendteils des Harzschuhs (14) so erstreckt, dass er dem Halterungsteil des Arms (13) entspricht, wobei der Seitenansatz (14c) des Basisendteils des Harzschuhs (14) mit einer Öffnung (14d) versehen ist, zur Verwendung beim Befestigen des Halterungsteils des Arms (13) und des Basisendteils des Harzschuhs (14) aneinander, und wobei ein Dämpfkissen (14g), das einen U-förmigen Querschnitt hat, mit dem ein Spannstößel in Kontakt kommt, in einem angenäherten Mittelteil des Harzschuhs (14) ausgebildet ist, um sich um eine Seite herum zur Rückfläche des Arms (13) zu erstrecken,
**dadurch gekennzeichnet, dass** der U-förmige Haken (14i) und das Dämpfkissen (14g) integral mit dem Harzschuh (14) ausgebildet sind.

2. Steuerketten-Spannvorrichtung nach Anspruch 1, worin der U-förmige Haken (14i) einen U-förmigen Querschnitt hat und an seiner Innenseitenoberfläche mit einem Positionierungsvorsprung (14k) versehen ist, um die seitliche Position des Harzschuhs (14) relativ zu dem Arm (13) zu bestimmen.

3. Steuerketten-Spannvorrichtung nach Anspruch 1, worin das Dämpfkissen (14g) an seiner Innenseitenoberfläche mit einem Positionierungsvorsprung (14h) versehen ist, um die seitliche Position des Harzschuhs (14) relativ zu dem Arm (13) zu bestimmen.

4. Steuerketten-Spannvorrichtung nach Anspruch 1, worin der Harzschuh (14) mit einem Positionierungsbein (14e) versehen ist, um die seitliche Position des Harzschuhs (14) relativ zu dem Arm (13) in einem Teil davon in der Nähe seines Mittelteils zu bestimmen.

## Revendications

1. Dispositif tendeur de chaîne de distribution, comportant :
un bras (13) ayant une partie d'attache formée dans sa partie d'extrémité de base, et un patin en résine (14) monté sur le bras (13) de manière à s'étendre le long du bras (13) et à être amené en contact glissant avec une chaîne (10), dans lequel un crochet en forme de U (14i) qui vient en prise avec une extrémité libre du bras (13) est formé dans une partie d'extrémité libre du patin en résine (14), un ergot latéral (14c) est étendu à partir d'un côté de la partie d'extrémité de base du patin en résine (14) de manière à correspondre à la partie d'attache du bras (13), l'ergot latéral (14c) de la partie d'extrémité de base du patin en résine (14) est muni d'une ouverture (14d) destinée à être utilisée pour fixer la partie d'attache du bras (13) et la partie d'extrémité de base du patin en résine (14) ensemble, et un coussinet d'amortissement (14g), ayant une coupe transversale en forme de U avec lequel un dispositif d'élévation de tension vient en contact, est formé dans une partie sensiblement médiane du patin en résine (14) de manière à s'étendre autour d'un côté vers la surface arrière du bras (13),
**caractérisé en ce que** le crochet en forme de U (14i) et le coussinet d'amortissement (14g) sont formés en un seul bloc avec le patin en résine (14).

2. Dispositif tendeur de chaîne de distribution selon la revendication 1, dans lequel le crochet en forme de U (14i) a une coupe transversale en forme de U, et est muni sur sa surface latérale intérieure d'une saillie de positionnement (14k) servant à déterminer la position latérale du patin en résine (14) par rapport au bras (13).

3. Dispositif tendeur de chaîne de distribution selon la revendication 1, dans lequel le coussinet d'amortissement (14g) est muni sur sa surface latérale intérieure d'une saillie de positionnement (14h) servant à déterminer la position latérale du patin en résine (14) par rapport au bras (13).

4. Dispositif tendeur de chaîne de distribution selon la revendication 1, dans lequel le patin en résine (14) est muni d'une patte de positionnement (14e) servant à déterminer la position latérale du patin en résine (14) par rapport au bras (13) dans une partie de celui-ci proche d'une partie médiane de celui-ci.
